# EUROPEAN PATENT SPECIFICATION

(11) **EP 3 425 554 B1**
(45) Date of publication and mention of the grant of the patent: **04.12.2024**
(21) Application number: 17760158.0
(22) Date of filing: 03.03.2017
(51) Int. Cl.: G06K 7/14, G06K 19/06, G06K 19/10

(54) **INFORMATION CODE AND INFORMATION CODE READING METHOD**
INFORMATIONSCODE UND INFORMATIONSCODELESEVERFAHREN
CODE D'INFORMATIONS ET PROCÉDÉ DE LECTURE DE CODE D'INFORMATIONS

(30) Priority: 04.03.2016 JP 2016042394
(43) Date of publication of application: 09.01.2019
(73) Proprietor: Denso Wave Incorporated, Chita-gun, Aichi 470-2297 (JP)
(72) Inventor: ITO, Kunihiko, Chita-gun Aichi 470-2297 (JP); YODA, Takuya, Chita-gun Aichi 470-2297 (JP); TANO, Atsushi, Chita-gun Aichi 470-2297 (JP); MIZUKOSHI, Hiroaki, Chita-gun Aichi 470-2297 (JP); USHIJIMA, Takao, Chita-gun Aichi 470-2297 (JP)
(74) Representative: Kuhnen & Wacker Patent- und Rechtsanwaltsbüro PartG mbB
(86) International application number: PCT/JP2017/008414
(87) International publication number: WO 2017/150696

(56) References cited:
- EP-A1- 2 940 628
- WO-A1-2015/067725
- WO-A1-2015/067725
- JP-A- 2005 070 866
- JP-A- 2009 087 286
- JP-A- 2015 219 709
- US-A- 6 102 289
- US-B1- 6 267 296

## Description

### [Technical Field]

The present invention relates to an information code and an information code reading method.

### [Background Art]

Conventionally, information codes based on various reading methods have been developed for the purpose of increasing capacity, saving space, and improving convenience including high-speed reading and high reading accuracy. For example, the information code (two-dimensional code) disclosed in Patent Literature (PTL) 1 below, which is an application that forms the basis of what is called a QR code (registered trademark), is formed by converting binary-coded data into cells and arranging the cells as a pattern on a two-dimensional matrix, and is characterized by being readable using pattern positioning symbols which are arranged at at least two predetermined positions in the matrix and from which scanning lines each crossing the center at various angles have the same ratio of frequency components. With the QR code configured in this manner, a revolutionary information code is obtained which can be read at high speed in all directions and can be read with accuracy and in which the proportion of data (the percentage of a data region in the code) is high.

In US 6 102 289 A, an easily findable 2-dimensional bar code is disclosed comprising a 2-dimensional bar code; and, a 1-dimensional bar code directly associated with the 2-dimensional bar code at a known distance and orientation with respect to a starting location of the 2-dimensional bar code whereby the 1-dimensional bar code acts as a locator for the 2-dimensional bar code. According to one aspect, the 1-dimensional bar code is incorporated as part of the 2-dimensional bar code into a hybrid bar code. The 1-dimensional bar code may contain information defining decoding of the 2-dimensional bar code. The 2-dimensional bar code may contain information supplemental to information in the 1-dimensional bar code. The 2-dimensional bar code may also contain information redundant to information in said 1-dimensional bar code. Further, the 1-dimensional bar code contains information required for decoding of the 2-dimensional bar code whereby a greater percentage of the 2-dimensional bar code is available to contain data. Further provided is a bar code scanning system capable of scanning and decoding either 1-dimensional bar codes or 2-dimensional bar codes combined with 1-dimensional bar codes.

WO 2015/067725 A1 is reflected in the preamble of claim1 and discloses a method for creating a 2D barcode, comprising: -
embedding primary information that can be read by a 2D-barcode-reader in a primary information pattern, - embedding secondary information that is made difficult to reproduce without alteration in a visible pattern, wherein said visible pattern is embedded within said barcode in at least one area that does not contain any primary information.

Further, US 6 267 296 B1 discloses a two-dimensional code made up of a matrix of cells formed with dark and light squares arranged in a pattern carrying an optically readable binary-coded data, and a method of reading such a two-dimensional code. The two-dimensional code features a structure in which at least two data regions are defined in a data field of the matrix. One of the data regions retains a code represented by the cells having a larger size, while the other data region retains a code represented by the cells having a smaller size.

### [Citation List]

### [Patent Literature]

[PTL 1] JP 2938338 B
[PTL 2] US 6 102 289 A
[PTL 3] WO 2015/067725 A1
[PTL 4] US 6 267 296 B1

### [Summary of the Invention]

### [Technical Problem]

However, even when a revolutionary code reading method such as that as described above has been developed, in order to read the information code generated according to the code reading method, it is necessary to prepare a reading device on which a dedicated program has been installed. In other words, with a reading device on which a program for a new code reading method has not been installed, there is a problem of an inability to read an information code generated according to that code reading method.

The present invention has been conceived to solve the problem described above and has an object to provide an information code and an information code reading method which allow facilitated reading even for a new code reading method.

### [Solution to Problem]

The above object is solved by the subject-matters of claims 1, 2 and 14. Further advantageous configurations of the invention can be drawn from the dependent claims.

The invention is described in the appended claims.

According to the disclosure of the present application, an information code (1, 1a-1j) includes: a first code region (10, 10a, 10b, 10c) which is generated by arranging a plurality of kinds of cells according to a first code reading method and in which predetermined information is recorded; and a second code region (20) which is generated by arranging a plurality of kinds of cells according to a second code reading method and in which reading method information about the first code reading method is recorded.

Note that the reference signs in the above parentheses indicate associations with specific elements in the embodiments to be described later.

### [Advantageous Effects of the Embodiments]

According to a first aspect of the disclosure, in the second code region generated by arranging the plurality of kinds of cells according to the second code reading method, the reading method information about the first code reading method is recorded. For example, when it is desired to read a code according to a new code reading method (the first code reading method) different from a code reading method according to which reading is possible by a reading device capable of reading a second code, the second code region, which is displayed together with the first code region generated according to the first code reading method, is generated in such a manner that the aforementioned reading method information is recorded according to a code recording method (the second code recording method) according to which reading is possible by the reading device. Thus, even a reading device on which a program for the first code reading method has not been installed becomes capable of reading an information code based on the first code reading method, for example, through installation thereon of a program for the first code reading method by using the aforementioned reading method information obtained by reading the second code region. Accordingly, reading according to a new code reading method (the first code reading method) can be easily performed while allowing a user to visually recognize, from the first code region, the form of an information code generated according to a code reading method according to which reading had not been possible by the current reading device.

According to a second aspect of the disclosure, the second code region is located at least partially covering a part of the first code region. Thus, the relevance between the second code region and the first code region can be recognized, and reading according to the new code reading method can be more easily performed using the aforementioned reading method information obtained by reading the second code region.

According to a third aspect of the disclosure, the second code region is located at least partially covering at least a part of an error correctable region included in the first code region. Thus, even when the second code region is located covering a part of the first code region, after an information code based on the first code reading method becomes readable using the aforementioned reading method information recorded in the second code region, the predetermined information recorded in the first code region can be obtained.

According to a fourth aspect of the disclosure, the second code region is located covering only at least a part of the error correctable region included in the first code region. Thus, since the second code region does not protrude out of the first code region, the predetermined information recorded in the first code region is made obtainable and, in addition, the relevance between the second code region and the first code region can be further increased.

According to a fifth aspect of the disclosure, the second code region is located at least partially covering a region larger than an error correctable region included in the first code region. Thus, reading according to a new code reading method can be easily performed while allowing a user to visually recognize, from the first code region, the form of an information code generated according to a code reading method according to which reading had not been possible by the current reading device.

According to a sixth aspect of the disclosure, the second code region is located in the first code region; thus, when an image of the first code region is captured, an image of the second code region is also captured and, therefore, occurrences of an imaging state in which an image of the second code region is not captured while an image of only the first code region is captured can be reduced.

According to a seventh aspect of the disclosure, the first code region is formed including a first specifying pattern region, a data recording region, and a free region, and the second code region is located on a basis of the free region. Thus, the position of the second code region on a basis of the first code region can be easily grasped with reference to the free region in the first code region.

According to an eighth aspect of the disclosure, the second code region is located in the free region; thus, the position of the second code region with respect to the first code region can be easily grasped and, moreover, the free region in the first code region can be effectively used to reduce the space required for the information code including the first code region and the second code region.

According to a ninth aspect of the disclosure, a margin having a width of four cells or less is provided between the first code region and the second code region; thus, the first code region and the second code region that have been image-captured can be easily distinguished.

According to a tenth aspect of the disclosure, the margin between the first code region and the second code region has a width of a single cell; thus, the first code region and the second code region that have been image-captured can be distinguished and, moreover, the first code region and the second code region can be easily recognized as one information code without producing a feeling of strangeness, allowing improvement of the design characteristics of the information code including both the code regions.

According to an eleventh aspect of the disclosure, the second code region is located covering a corner of the first code region in the second specifying pattern region located at a corner of the second code region. Thus, the second specifying pattern region in the second code region is located at a corner of the first code region, and therefore the first code region and the second code region can be easily recognized as one information code without invoking a feeling of strangeness, allowing improvement of the design characteristics of the information code including both the code regions.

According to a twelfth aspect of the disclosure, the second code region is formed using the same kind of cells as cells included in the first code region; thus, the first code region and the second code region can be easily recognized as one information code without invoking a feeling of strangeness, allowing improvement of the design characteristics of the information code including both the code regions.

According to a thirteenth aspect of the disclosure, the first code region and the second code region are formed including cells at least a part of which have a matching arrangement in an overlapping region between the first code region and the second code region. When the cell arrangement of the first code region and the cell arrangement of the second code region are formed as identical as possible in an overlapping region between the first code region and the second code region by taking advantage of the fact that, using a mask or the like, the cell arrangement can be changed while still recording the same information, the region available as the first code region is large, allowing an increase in the amount of information that is recorded in the first code region.

According to a fourteenth aspect of the disclosure, an outline shape of the first specifying pattern region in the first code region and an outline shape of the second specifying pattern region in the second code region are different; thus, the recognition of the position of the second code region with respect to the first code region can be facilitated while suppressing the effects on the design characteristics of the information code including both the code regions.

According to a fifteenth aspect of the disclosure, the reading method information includes an address of a website for downloading a program for obtaining the predetermined information by decoding a captured image of the first code region. Thus, the aforementioned address can be obtained by reading the second code region, and therefore the aforementioned program can be smoothly installed on the reading device that has read the second code region, allowing more facilitated reading according to a new code reading method.

According to a sixteenth aspect of the disclosure, when the reading method information is obtained by decoding the second code region that has been image-captured, a program for reading the first code region is installed on the reading device using the obtained reading method information. Thus, even a reading device on which the program for reading the first code region has not been installed becomes capable of reading an information code based on the first code reading method through installation thereon of the program for reading the first code region by using the aforementioned reading method information obtained by reading the second code region. Thus, reading according to a new code reading method (the first code reading method) can be easily performed while allowing a user to visually recognize, from the first code region, the form of an information code generated according to a code reading method according to which reading had not been possible by the current reading device.

### [Brief Description of the Drawings]

Fig. 1 is an illustration of an information code according to the first embodiment.
Fig. 2 is a block diagram illustrating an overall configuration of a reading device.
Fig. 3 is an illustration of a business card on which an information code and display information are printed and displayed.
Fig. 4 is an illustration of a display screen on which a description regarding a new code reading method and the address of a website for downloading are displayed.
Fig. 5 is a flowchart illustrating the flow of a reading process in a reading device 100 according to the first embodiment.
Fig. 6 is a flowchart illustrating the flow of a reading process at a reading device 100a according to the first embodiment.
Fig. 7 is an illustration of a display screen on which display information recorded in a code region 10 is displayed.
Fig. 8 is an illustration of an information code according to the second embodiment.
Fig. 9 is an illustration of an information code according to the first variation of the second embodiment.
Fig. 10 is an illustration of an information code according to the second variation of the second embodiment.
Fig. 11 is an illustration of an information code according to the third embodiment.
Fig. 12 is an illustration of an information code according to the fourth embodiment.
Fig. 13 is an illustration of an information code according to the fifth embodiment.
Fig. 14 shows, in (A), an illustration of an information code in which a free region is in the shape of a triangle, and shows, in (B), an illustration of an information code in which a free region is in the shape of an ellipse.
Fig. 15 shows, in (A), an illustration of an information code in which a code region 10c and a code region 20 are located close to each other, and shows, in (B), an illustration of an information code in which a code region 10c and a code region 20 partially overlap each other.

### [Description of the Embodiments]

### [First Embodiment]

Hereinafter, the first embodiment in which an information code according to partial aspects of the present disclosure is embodied will be described with reference to the drawings.

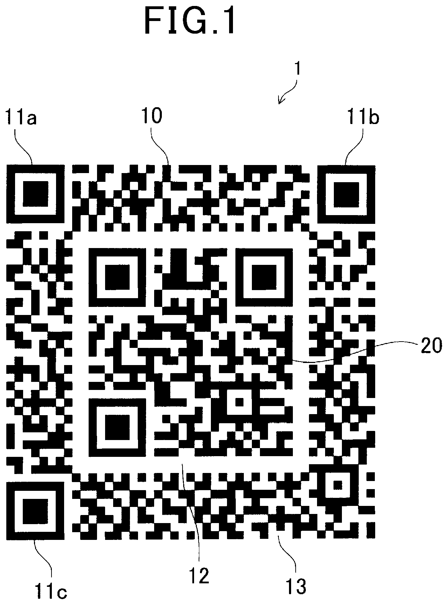

As shown in Fig. 1, an information code 1 according to the present embodiment includes two code regions, namely, a code region 10 and a code region 20, and each of the code regions 10 and 20 is configured as a cell assembly which is a plurality of information display unit cells (hereinafter referred to simply as cells) arranged according to information to be recoded. Each of the code region 10 and the code region 20 is generated so as to function as being even individually readable as an information code.

In particular, the code region 20 is generated according to a widely distributed code reading method, as described later, and is optically readable by a commonly-used reading device 100. The code region 10 corresponds to an information code to be distributed and is generated according to a new code reading method, as described later; the reading device 100 on which an application program (hereinafter referred to simply as a program) corresponding to this new code reading method has not been installed cannot read a code region (information code) generated according to that reading method.

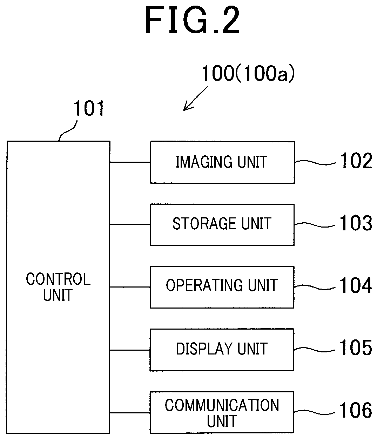

Here, an outline configuration of the reading device 100 will be described with reference to Fig. 2.

The reading device 100 is configured, for example, as a portable information terminal which is a mobile phone such as a smartphone having a camera function and, when a predetermined program for reading a widely distributed information code is installed thereon, functions as a code reader.

As shown in Fig. 2, the reading device 100 includes a control unit 101 which deals with control relating, for example, to the process of reading an information code that has been image-captured on the basis of a pixel signal from an imaging unit 102 having a camera function in addition to normal call process, communication process, etc., of a mobile phone. This control unit 101 is configured using a microcomputer as a main unit, includes a central processing unit (CPU), a system bus, an input/output interface, and the like, and functions as an information processing device together with a storage unit 103. The storage unit 103 is configured using known semiconductor memories such as a read-only memory (ROM), a random-access memory (RAM), and a non-volatile memory; in this storage unit 103, predetermined programs, etc., for implementing, for example, the call function, the communication function, and the functions of a code reader, are stored in advance in a form executable by the control unit 101.

Furthermore, the reading device 100 includes an operating unit 104, a display unit 105, and a communication unit 106. The operating unit 104 includes a plurality of keys or the like and has a function of inputting, to the control unit 101, information corresponding to a key operation. The display unit 105 includes liquid crystals or the like and has a function of displaying, on a screen, predetermined information such as the result of reading the information code, under control of the control unit 101. The communication unit 106 has a function of performing data communication with an external device via a network such as a mobile phone network or the Internet, under control of the control unit 101.

Each of the code region 10 and the code region 20 will be described below.

The code region 10 is generated according to a new code reading method (hereinafter also referred to as a new reading method) in such a manner that predetermined information is recoded by arranging a plurality of kinds of cells different in color, density, or luminance. Here, the new reading method complies with a new code standard which is a newly developed method for reading a new information code, for example; the reading device 100 on which a program for this new reading method has not been installed cannot read a code region (information code) generated according to the new reading method. In other words, since a new information code including the code region 10 is not prevalent, the commonly used reading device 100 cannot read the new information code. Note that the code region 10 may correspond to one example of "the first code region" and the new reading method corresponding to this code region 10 (new code reading method) may correspond to one example of "the first code reading method".

In the present embodiment, the code region illustrated in Fig. 1 is used as the code region 10 generated according to the newly developed method for reading a new information code. The code region 10 in Fig. 1 is generated according to a new code reading method disclosed, for example, in JP 2014-139771 A, and includes: specifying pattern regions 11a to 11c in which specifying patterns having a predetermined shape are located; a data recording region in which data is recorded using a plurality of kinds of cells; an error correction code recording region in which an error correction code is recorded using a plurality of kinds of cells; and a free region 12 or the like in which the data is not recorded using the plurality of kinds of cells.

The specifying pattern regions 11a to 11c correspond to the position detection pattern of the QR code and are used for recognizing the position of the code region 10 from the captured image. The free region 12 is greater in size than a single cell and is provided at the center of the code region 10; in the free region 12, data can be recorded or a design can be displayed according to a method different from a method for recording into the data recording region, the error correction code recording region, etc. The error correction code recording region is used for performing known error correction on errors in the data in the data recording region using the recorded error correction code and is used in order to implement an error correction function.

Note that Fig. 1 shows the data recording region and the error correction code recording region as a recording region 13. In the present embodiment, the information code including the code region 10 is also referred to as "a frame QR".

As content recorded in the code region 10 generated in this manner, header data is set in such a manner that information, etc., indicating that the content is a frame QR is included at the beginning portion of a data sequence, and data, etc., to be decoded follows the header data.

The code region 20 is generated according to a widely distributed code reading method (hereinafter also referred to as a conventional reading method) in such a manner that predetermined information is recoded by arranging a plurality of kinds of cells different in color, density, or luminance. In the present embodiment, a code region generated according to a method for reading the QR code illustrated in Fig. 1 is used as the code region 20, and a position detection pattern, an alignment pattern, a timing pattern, or the like is provided as the specifying pattern having a predetermined shape. The aforementioned predetermined information includes reading method information (which will be described later) about the new reading method for the code region 10 corresponding to the information code to be distributed.

Particularly, in the present embodiment, the code region 20 is configured using the same kind of cells (specifically, bright-colored cells and dark-colored cells having the same size) as the cells included in the code region 10, and is located at the center of the free region 12 in the code region 10 on a basis of the free region 12 therein. Note that the code region 20 may correspond to one example of "the second code region" and the conventional reading method corresponding to this code region 20 may correspond to one example of "the second code reading method".

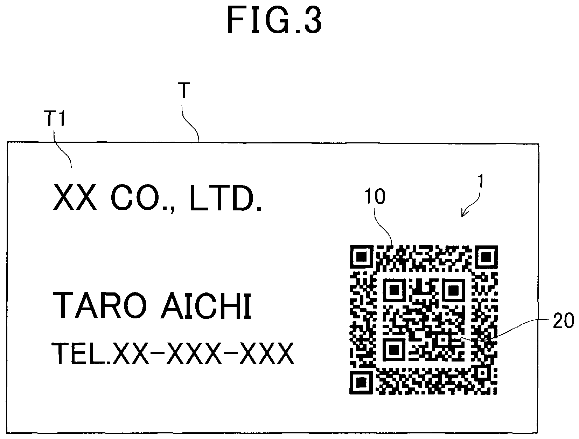

Next, an example in which even the reading device 100 can perform reading according to the new reading method corresponding to the code region 10 using an information code 1 including the code region 10 and the code region 20 configured as described above will be described with reference to Figs. 3 to 5.

On a business card T shown in Fig. 3, the information code 1 including the code region 10 and the code region 20 described above and display information T1 such as a company name, a personal name, and a phone number are printed and displayed. The code region 10 printed on the business card T is generated in such a manner that the display information T is recorded according to the aforementioned new reading method. The code region 20 printed on the business card T is generated in such a manner that information including reading method information about the aforementioned new reading method is recorded according to the method for reading the QR code.

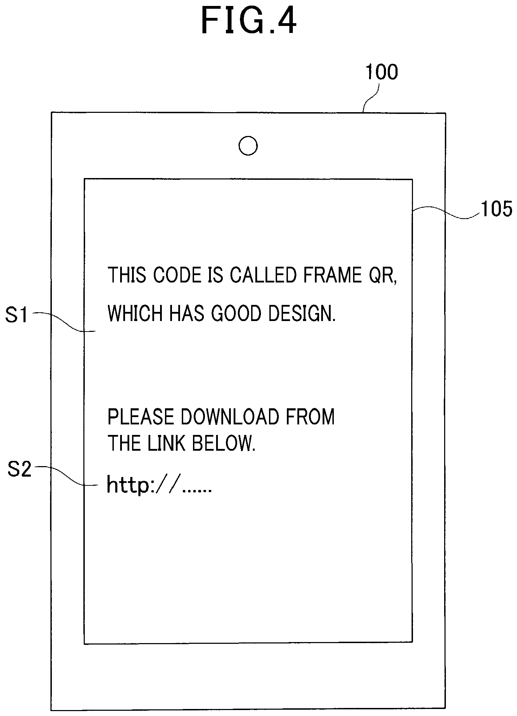

Here, as the aforementioned reading method information, for example, as illustrated in Fig. 4, an explanatory sentence S1 about the new reading method corresponding to the code region 10 and an address (URL information) S2 of a website for downloading a program for decoding the code region 10 are prepared as a decoding result in such a manner as to be displayable on the screen of the display unit 105.

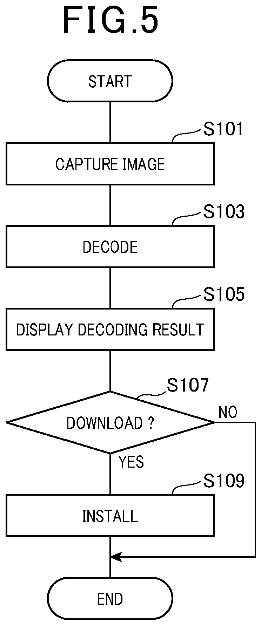

Next, a reading process performed when an image of the information code 1 is captured using the reading device 100 on which a program for decoding the code region 10 has not been installed will be described with reference to the flowchart shown in Fig. 5.

First, when an image of the information code 1 displayed on the business card T is captured with the imaging unit 102 using the reading device 100 in which the control unit 101 performs the reading process (S101), the code region 10 is not able to be decoded, but the code region 20 is decoded (S103). The aforementioned reading method information is obtained through decoding of this code region 20, and the explanatory sentence S1 and the address S2 such as those illustrated in FIG. 4 are displayed on the screen of the display unit 105 as the decoding result (S105).

When the address S2 is used to select downloading (Yes in S107), connection to the website for downloading is made, and then a program for decoding the code region 10, which is downloaded from the website for downloading, is installed, enabling the reading device 100 to decode the code region 10 (S109). Hereinafter, the reading device which has become capable of decoding the code region 10 through installation thereon of a program for decoding the code region 10 in this manner will also be referred to as a reading device 100a. In contrast, when downloading is not selected (No in S107), the reading process ends without the aforementioned installation having been performed.

Note that the aforementioned reading method information is not limited to an embodiment in which the explanatory sentence S1 and the address S2 such as those illustrated in Fig. 4 are set in such a manner as to be displayable on the screen; for example, only the address S2 may be set in such a manner as to be displayable on the screen. Furthermore, the aforementioned reading method information may be the address (URL information) of an introduction website on the Internet on which the new reading method corresponding to the code region 10 including the explanatory sentence S1 and the address S2 is introduced. By way of such an introduction website, a larger amount of information about the new code corresponding to the code region 10 can be provided.

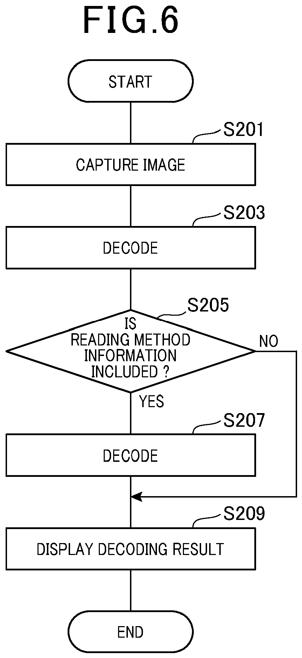

Next, a reading process performed when an image of the information code 1 is captured using the reading device 100a on which a program for decoding the code region 10 has been installed will be described with reference to the flowchart shown in Fig. 6.

First, when an image of the information code 1 displayed on the business card T is captured with the imaging unit 102 using the reading device 100a in which the control unit 101 performs the reading process (S201), a known decoding process for decoding distributed information codes such as a barcode and a QR code is performed (S203). Next, in the determination process shown in Step S205, whether or not the aforementioned reading method information is included in the decoding result is determined. Note that whether or not the aforementioned reading method information is included in the decoding result may be determined on the basis of whether or not the aforementioned address S2 is included in the decoding result, or may be determined on the basis of whether or not both the explanatory sentence S1 and the address S2 are included in the decoding result, or may be determined on the basis of whether or not predetermined information is included in the decoding result, for example.

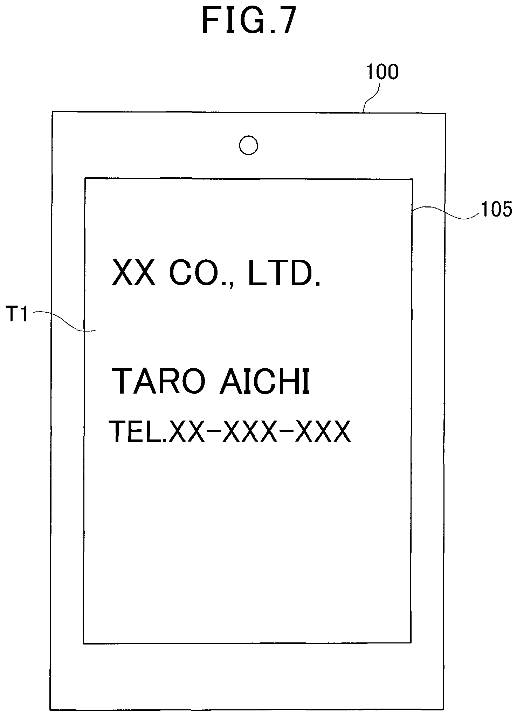

Here, since the code region 20 shown in Fig. 3 is decoded, when it is determined that the aforementioned reading method information is included in the decoding result (Yes in S205), a process for decoding the code region 10 is performed on the image captured in Step S201 described above (S207). Furthermore, this result of decoding the code region 10 is displayed on the screen of the display unit 105 (S209). In the present embodiment, the code region 10 is generated in such a manner that the display information T1 is recorded, and thus, as illustrated in Fig. 7, the display information T1 is displayed on the screen of the display unit 105 as the decoding result.

Note that when an image of a distributed normal information code different from the information code 1 is captured, it is determined that the aforementioned reading method information is not included in the decoding result (No in S205); in this case, the decoding result based on the distributed normal information code is displayed on the screen of the display unit 105 (S209).

As described above, in the information code 1 according to the present embodiment, the reading method information about the new reading method is recoded in the code region 20 which is generated by arranging a plurality of kinds of cells according to the conventional reading method (second code reading method). Furthermore, the code region 20 generated in such a manner that the aforementioned reading method information is recoded according to the conventional reading method according to which reading is possible by the reading device 100 is displayed together with the code region 10 generated according to the new reading method.

In the method for reading the information code according to the present embodiment, when the aforementioned reading method information is obtained by decoding the code region 20 that has been image-captured, a program for reading the code region 10 is installed on the reading device 100 using the obtained reading method information.

Thus, even the reading device 100 on which a program for the new reading method has not been installed becomes capable of reading the information code based on the new reading method through installation thereon of a program for the new reading method by using the aforementioned reading method information obtained by reading the code region 20. Thus, reading according to the new reading method (the first code reading method) can be easily performed while allowing a user to visually recognize, from the code region 10, the form of the information code generated according to the code reading method according to which reading had not been possible by the current reading device 100. Therefore, the distribution of newly developed information codes and the sale of programs (applications) for reading those information codes can be promoted.

Furthermore, since the code region 20 is located in the code region 10, when an image of the code region 10 is captured, an image of the code region 20 is also captured; therefore, occurrences of an imaging state in which an image of the code region 20 is not captured while an image of only the code region 10 is captured can be reduced.

Furthermore, the code region 10 is formed including the specifying pattern regions 11a to 11c, the recording region 13 which is the data recording region and the error correction code recording region, and the free region 12, and the code region 20 is located on a basis of the free region 12. Thus, the position of the code region 20 on a basis of the code region 10 can be easily grasped with reference to the free region 12 in the code region 10.

Particularly, since the code region 20 is located at the center of the free region 12, the position of the code region 20 with respect to the code region 10 can be easily grasped and, moreover, the free region 12 in the code region 10 can be effectively used to save space for the information code 1 including the code region 10 and the code region 20.

Furthermore, since the code region 20 is formed using the same kind of cells as the cells included in the code region 10, the code region 20 and the code region 10 can be easily recognized as one information code without causing a feeling of strangeness, allowing improvement of the design characteristics of the information code including both the code regions 10 and 20.

Furthermore, the reading method information includes a program for obtaining the display information T1 by decoding the captured mage of the code region 10, that is, the address S2 of the website for downloading a program for decoding the code region 10. Thus, the aforementioned address S2 can be obtained by reading the code region 20, and therefore the aforementioned program can be smoothly installed on the reading device 100 that has read the code region 20, allowing more facilitated reading according to the new reading method.

### [Second Embodiment]

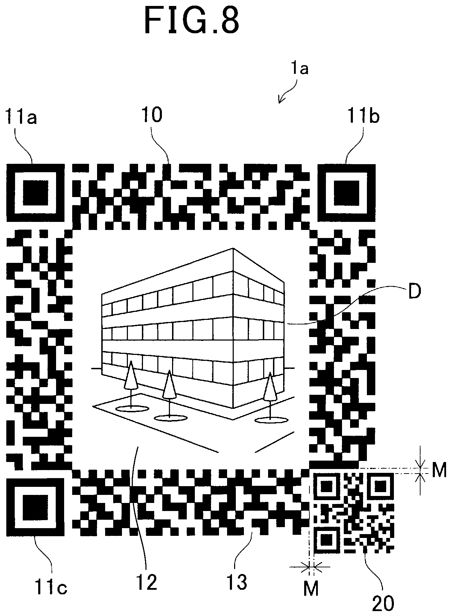

Next, the information code according to the present second embodiment will be described with reference to Fig. 8.

As shown in Fig. 8, in an information code 1a according to the present embodiment, on a basis of the free region 12 in the code region 10, the code region 20 is located at least partially covering at least a part of the error correctable region included in the code region 10, and the code region 20 does not extend into the free region 12. In particular, a margin M having a predetermined width is provided between the code region 10 and the code region 20, and this margin is set equal to the width of a single cell in the code region 20. Furthermore, a predetermined design D is displayed in the free region 12 in the code region 10. Note that in the present embodiment, the cells included in the code region 20 are smaller in size than the cells included in the code region 10.

Even when the code region 20 is located covering at least a part of the error correctable region included in the code region 10 as just described, after the information code based on the new reading method becomes readable using the aforementioned reading method information recorded in the code region 20, the predetermined information recorded in the code region 10 can be obtained using error correction. In particular, since the design D is displayed in the free region 12 in the code region 10, the information code based on the new reading method becomes more attractive for users, allowing promotion of distribution of the information code based on the new reading method.

Furthermore, since the margin M between the code region 10 and the code region 20 has a width of a single cell in the code region 20, the code region 10 and the code region 20 that have been image-captured can be distinguished and, moreover, the code region 10 and the code region 20 can be easily recognized as one information code without causing a feeling of strangeness, allowing improvement of the design characteristics of the information code 1a including both the code regions 10 and 20.

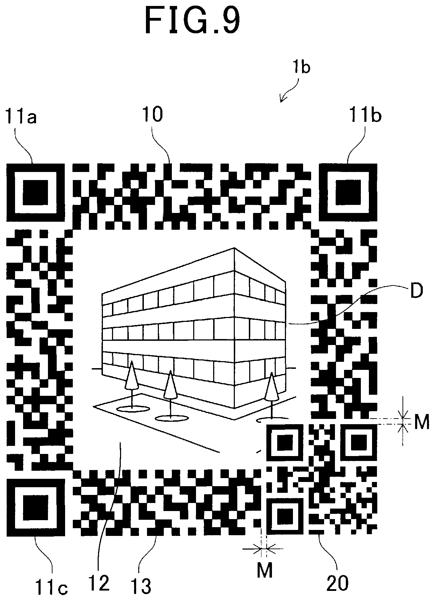

For example, as the first variation of the present embodiment, the margin M between the code region 10 and the code region 20 may have a width of a single cell in the code region 20, and on a basis of the free region 12 in the code region 10, the code region 20 may be located in the code region 10 so as to at least partially cover at least a part of the error correctable region included in the code region1 10, as in an information code 1b illustrated in Fig. 9. With this configuration, the code region 10 and the code region 20 that have been image-captured can be distinguished and, moreover, the code region 10 and the code region 20 can be easily recognized as one information code without causing a feeling of strangeness, allowing further improvement of the design characteristics of the information code 1b including both the code regions 10 and 20. Furthermore, since the code region 20 is located in the code region 10, when an image of the code region 10 is captured, an image of the code region 20 is also captured; therefore, occurrences of an imaging state in which an image of the code region 20 is not captured while an image of only the code region 10 is captured can be reduced.

Note that the margin M is not limited to being set to the width of a single cell in the code region 20 and may be set to the width of a single cell in the code region 10 or, in order to make both the code regions 10 and 20 easily distinguishable while suppressing the effects on the design characteristics of the information codes 1a and 1b, may be set to the width of between one cell and four cells, inclusive, with reference to the cells included in one of both the code regions 10 and 20.

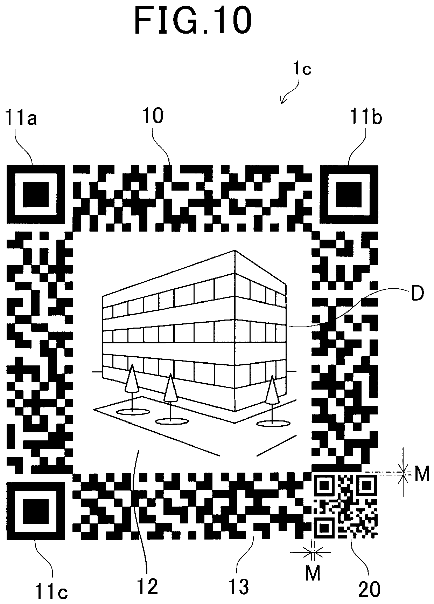

Furthermore, as the second variation of the present embodiment, on a basis of the free region 12 in the code region 10, the code region 20 may be located at least partially covering at least only a part of the error correctable region included in the code region 10, as in an information code 1c illustrated in Fig. 10.

With this configuration, the code region 20 does not protrude out of the code region 10, and thus the predetermined information recorded in the code region 10 is made obtainable and, in addition, the relevance between the code region 20 and the code region 10 can be further increased.

### [Third Embodiment]

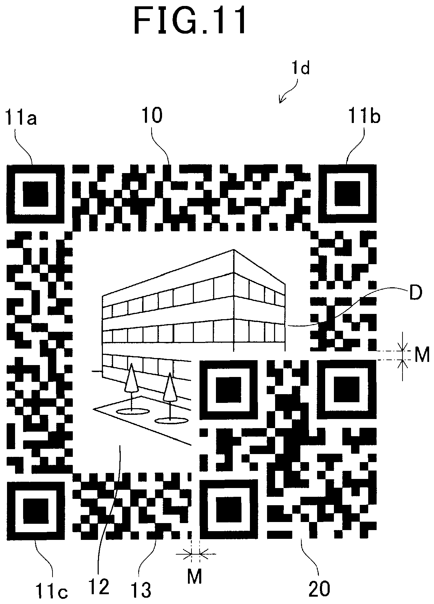

Next, the information code according to the present third embodiment, which discloses partial aspects of the present disclosure, will be described with reference to Fig. 11.

As shown in Fig. 11, in an information code 1d according to the present embodiment, on a basis of the free region 12 in the code region 10, the code region 20 is located in the code region 10 so as to partially cover a region larger than the error correctable region included in the code region 10. Furthermore, the code region 20 is configured using the same kind of cells (bright-colored cells and dark-colored cells having the same size) as the cells included in the code region 10, and the above-described margin M having a predetermined width is provided between the code region 10 and the code region 20.

Also in this case, even the reading device 100 on which a program for the new reading method has not been installed becomes capable of reading the information code based on the new reading method through installation thereon of a program for the new reading method by using the aforementioned reading method information obtained by reading the code region 20. Thus, reading according to the new reading method (the first code reading method) can be easily performed while allowing a user to visually recognize, from the code region 10, the form of the information code generated according to the code reading method according to which reading had not been possible by the current reading device.

In particular, the code region 20 can be increased in size to an extent that the outline form of the information code based on the new reading method is visually recognizable; thus, the cell size can be increased to facilitate reading of the code region 20, and the number of cells can be increased to increase the amount of information that is recorded in the code region 20.

Note that by taking advantage of the fact that the cells included in the code region 20 and the cells included in the code region 10 are configured using the same kind of cells, the code region 10 and the code region 20 may be formed including cells at least a part of which have a matching arrangement in an overlapping region between the code region 10 and the code region 20. By taking advantage of the fact that, using a plurality of kinds of mask patterns or the like, the cell arrangement can be changed for the same information to be recorded, the cell arrangement of the code region 10 and the cell arrangement of the code region 20 are formed as identical as possible in an overlapping region.

Specifically, on the premise that the information to be recorded does not change, for example, the QR code in which the aforementioned reading method information is recorded is generated in a normal generation method, and then the cell arrangement is changed by changing the mask pattern so that the cell lightness and darkness become as identical as possible in the aforementioned overlapping region in the code region 10. At this time, in addition to the QR code for generating the code region 20, the arrangement of the cells included in the code region 10 may also be changed by changing the mask pattern so that the cell lightness and darkness become as identical as possible in the aforementioned overlapping region. When the code region generated by changing the cell arrangement in this manner is disposed, as the code region 20, covering the aforementioned overlapping region in the code region 10, the cells include in the code region 10 and the cells included in the code region 20 match each other, as if fused with each other, in said overlapping region. Thus, even with a configuration in which a wide range of the code region 10 is covered by the code region 20 as in Fig. 11, reduction in a region available as the code region 10 can be suppressed.

Thus, compared to a configuration in which a part of the code region 10 is simply covered by the code region 20, the region available as the code region 10 is larger; thus, the predetermined information recorded in the code region 10 can be obtained using error correction and, moreover, the amount of information that is recorded in the code region 10 can be increased.

### [Fourth Embodiment]

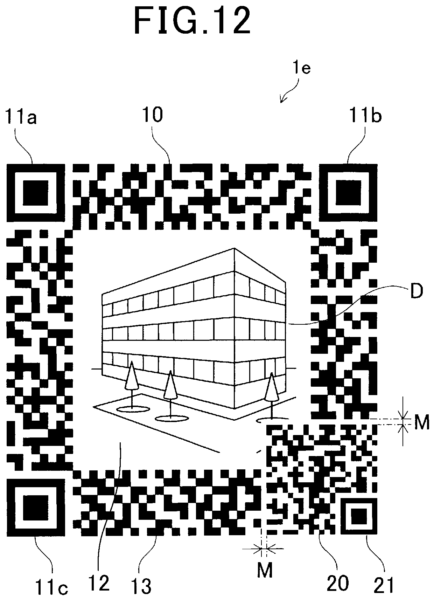

Next, the information code according to the present fourth embodiment will be described with reference to Fig. 12.

As shown in Fig. 12, the code region 20 in an information code 1e according to the present embodiment is configured in such a manner that one specifying pattern region 21 is located at a corner of the code region 20. Furthermore, on a basis of the free region 12 in the code region 10, the code region 20 is located at least partially covering at least a part of the error correctable region included in the code region 10, and covering, in the specifying pattern region 21, a corner at which the specifying pattern regions 11a to 11c are not located among the four corners of the code region 10. Note that the specifying pattern regions 11a to 11c may correspond to one example of "the first specifying pattern region", and the specifying pattern region 21 may correspond to one example of "the second specifying pattern region".

Thus, the specifying pattern region 21 in the code region 20 is located at a corner of the code region 10 and, therefore, from the relationship between the specifying pattern regions 11a to 11c in the code region 10 and the specifying pattern region 21 in the code region 20, the code region 10 and the code region 20 can be easily recognized as one information code without causing a feeling of strangeness, allowing improvement of the design characteristics of the information code including both the code regions 10 and 20.

### [Fifth Embodiment]

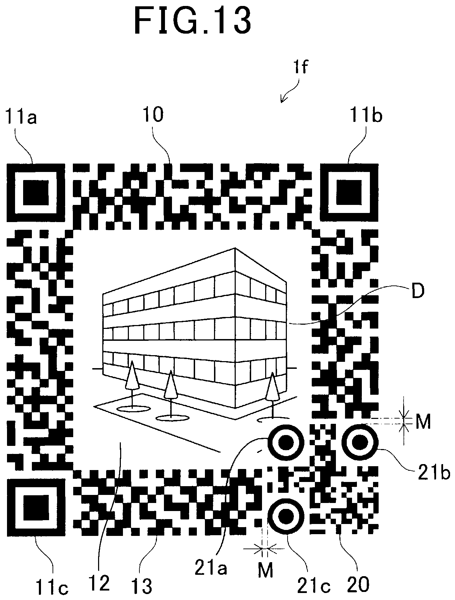

Next, the information code according to the present fifth embodiment will be described with reference to Fig. 13.

As shown in Fig. 13, an information code 1f according to the present embodiment is configured in such a manner that the form of the specifying pattern regions 11a to 11c in the code region 10 and the form of specifying pattern regions 21a to 21c in the code region 20 are different. Specifically, for example, each of the specifying pattern regions 11a to 11c is formed in the same manner as the position detection pattern of the QR code, and each of the specifying pattern regions 21a to 21c is formed of three concentric circles arranged at a predetermined ratio. Note that the specifying pattern regions 21a to 21c may correspond to one example of "the second specifying pattern region".

Since the form of the specifying pattern regions 11a to 11c in the code region 10 and the form of the specifying pattern regions 21a to 21c in the code region 20 are different as described above, the recognition of the position of the code region 20 with respect to the code region 10 can be facilitated while suppressing the effects on the design characteristics of the information code including both the code regions 10 and 20.

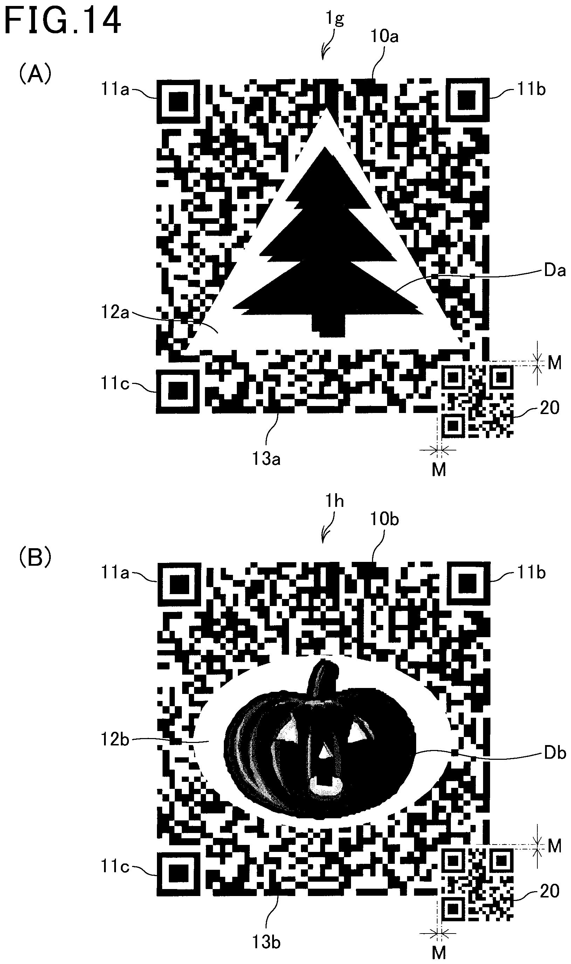

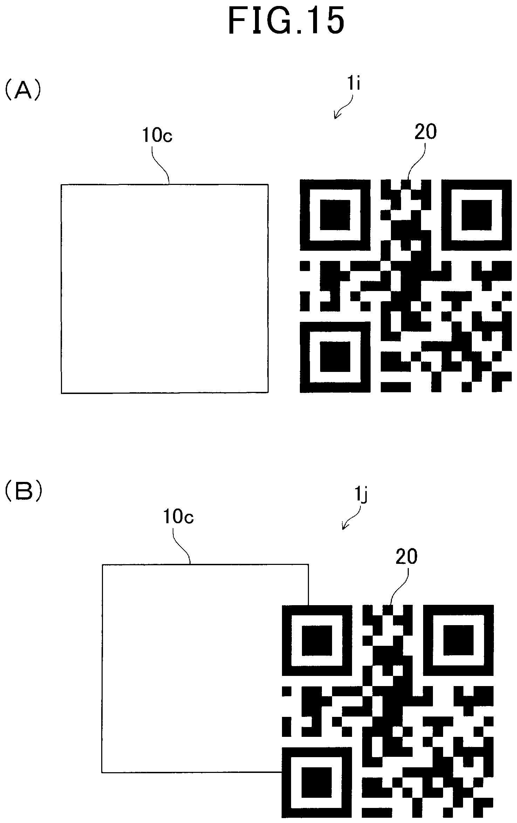

Note that the present disclosure is not limited to the aforementioned embodiments and may, for example, be implemented as follows.
(1) In each of the aforementioned embodiments, the free region 12 has a square shape, but may have another shape. Thus, a free region 12a may be in the shape of a triangle as in an information code 1g illustrated in (A) in Fig. 14. As another example, a free region 12b may be in the shape of an ellipse as in an information code 1h illustrated in (B) in Fig. 14. It is sufficient that selection of the shape of the free region conform to the shape of content displayed in the free region. Specifically, in (A) in Fig. 14, the overall shape is a triangular design Da and thus, the free region 12a is also triangular, and in (B) in Fig. 14, the overall shape is an elliptical design Db and thus, the shape of an ellipse is also selected for the free region 12b. When the free region conforms to the design of the displayed content in this manner, compared to the case where the free region uniformly has a fixed shape (in the present embodiment, a square shape), the amount of information that is recorded in the code region 10a in (A) in Fig. 14 and the code region 10b in (B) in Fig. 14 can be increased, enabling efficient data arrangement. Furthermore, when the free region conforms to the shape of the design in the free region, the information code and the design have affinity with each other, allowing improvement of the design characteristics. Note that although Fig. 14 illustrates, in both (A) and (B), the code region 20 having the configuration shown in Fig. 8 according to the second embodiment, this is not intended to be limiting; the configurations shown in Figs. 9 to 13 may also be applied.
(2) In the aforementioned embodiments, the code region 10 generated according to a new reading method is not limited to being formed including the free region 12, and may be formed including another feature. With this configuration, the code region 20 and a code region 10c generated including no free region 12, but including another feature, may be located close to each other without overlap, as in an information code 1i illustrated in (A) in Fig. 15. Furthermore, when the code region 10c is generated having the error correction function, the code region 20 may be located overlapping the code region 10c, in an error correctable range thereof, as in an information code 1j illustrated in (B) in Fig. 15. Furthermore, as in the case of the aforementioned third embodiment, the code region 20 may be located overlapping the code region 10c in a range wider than an error correctable range thereof. Note that in (A) and (B) in Fig. 15, for convenience, the code region 10c is shown by a solid line indicating the outline thereof.
(3) The aforementioned reading method information is not limited to being set to include the address of a website for downloading, the address of a website for introducing a new reading method, and the like; for example, the aforementioned reading method information may be set to include no addresses, but include only a sentence such as the explanatory sentence S1, or may be set to include other information about the new reading method. Furthermore, the reading method information about a program for the aforementioned new reading method is not limited to the address of a website for downloading, and may be the address of a website which enables the use of a web application which does not need to be downloaded on the premise that the reading device 100 includes a versatile web browser.
(4) The code region 20 is not limited to being generated as a code region based on the method for reading a QR code and may be generated as a code region based on other widely distributed code reading methods such as one-dimensional code including a barcode and a two-dimensional code other than the QR code which includes a data matrix code and a MaxiCode.
(5) The information codes 1 and 1a to 1j configured as described above are not limited to being used in the form of print on the business card T and may be displayed and used on other display media such as an advertisement and a brochure.
(6) The reading device 100 is not limited to being configured as a portable information terminal such as a smartphone; even when the reading device 100 is configured as an information terminal which, when a predetermined program (application) is installed thereon, functions as a code reader, for example, as an information terminal dedicated to a code reader or a stationary information terminal, the aforementioned advantageous effects can be produced by reading the information codes 1 and 1a to 1j.

The invention is defined by the appended claims.

### [Reference Signs List]

1, 1a-1j ... Information code
10, 10a, 10b, 10c ... Code region (first code region)
11a-11c ... Specifying pattern region (first specifying pattern region)
12, 12a, 12b ... Free region
20 ... Code region (second code region)
21, 21a-21c ... Specifying pattern region (second specifying pattern region)

## Claims

1. An information code (1; 1b, 1c, 1d, 1e) comprising:
a first code region (10) including first position detection patterns (11a, 11b, 11c) each having a predetermined shape located at corner portions of the first code region (10) and formed by a first plurality of kinds of cells and each showing a position of the first code region (10) used for recognition of the first code region (10) from a captured image of the information code (1), a recording region (13) in which data to be recorded are arranged by the first plurality of kinds of cells, and a free region (12) from which data provided by the cells are avoided from being recorded,
wherein the first plurality of kinds of cells are i) read according to a first code reading method based on decoding the cells in the captured image, and ii) being different, between kinds thereof, color, density, or luminance from each other; and a second code region (20) in which reading method information providing the first code reading method are arranged by a second plurality of kinds of cells, the second plurality of kinds of cells include cells for forming a second position detection pattern showing a position of the second code region (20),
wherein the second plurality of kinds of cells arranged in the second code region (20) being, between kinds hereof, different in color, density or luminance, from each other, **characterized in that**
the second code region (20) is located partially covering on the recording region (13) of the first code region (10), a partially covered portion of the recording region (13) being a corner portion thereof (13) at which the first position detection patterns (11a, 11b, 11c) are not arranged; and
a region of margin (M) is provided between the recording region (13) of the first code region (10) and the second code region (20), the first and second kinds of cells being not provided at the region of margin (M), the region of margin (M) having a width which is equal to a width of one of either each of the first kind of cells or each of the second kinds of cells.

2. The information code according to claim 1, wherein
the first position detection patterns (11a, 11b, 11c) are three in number and indicate a position of the first code region (10) on a medium on which the information code is formed, the first position detection patterns (11a, 11b, 11c) being arranged at three corners of the first code region (10),
the second code region (20) includes a single second position detection pattern (21), the second position detection pattern (21) being arranged at a corner of the second code region (20), the second position detection pattern (21) being similar in a rectangular shape to the first position detection pattern (11a, 11b, 11c) of the first code region (10), and
the second position detection pattern (21) is arranged to cover a single corner of the first code region (10) such that the second code region (20) covers a specified area at the single corner of the first code region (10), the first position detection patterns (11a, 11b, 11c) being avoided from arranged at the single corner of the first code region (10).

3. The information code according to claim 1 or 2, wherein
the recording region (13) of the first code region (10) include the cells for error correction,
the first code reading method includes an error correction function, and
the second code region (20) is located, by at least a part thereof, partially covering on a part of the recording region (13), the part thereof being the cells for the error correction arranged in the first code region (10).

4. The information code according to claim 3, wherein
the second code region (20) is located covering at least on the recording region (13).

5. The information code (1) according to any one of claims 1 to 4, wherein
the second code region (20) is located to be present within the first code region (10).

6. The information code according to any one of claims 1 to 5, wherein
the first plurality of kinds of cells and the second plurality of kinds of cells are the same in color, density, or luminance,
a form of the first position detection patterns of the first code region (10) and a form of the second position detection pattern of the second code region (20) are the same.

7. The information code according to claim 6, wherein the second plurality of kinds of cells are smaller in size than the first plurality of kinds of cells, and
the first plurality of kinds of cells are composed of bright-colored cells and dark-colored cells and the second plurality of kinds of cells are composed of bright-colored cells.

8. The information code according to claim 6, wherein the second plurality of kinds of cells are the same in size as the first plurality of kinds of cells, and
the first plurality of kinds of cells are composed of bright-colored cells and dark-colored cells and the second plurality of kinds of cells are composed of bright-colored cells.

9. The information code according to any one of claims 1 to 8, wherein
the reading method information includes an address of a website for downloading a program for obtaining the predetermined information by decoding the captured image of the information code.

10. The information code of any one of claims 1 to 9, wherein the first and second plurality of kinds of cells in both the first and second code regions are rectangular in shape thereof.

11. An information code reading method for optically reading, using a reading device, an information code according to claim 1:
the information code reading method is **characterized by** comprising the steps of:
optically (S101) capturing an image of the information code on a medium such that the first code region (10) and the second code region (20) are captured optically,
decoding (S103) the optically captured image of the information code based on decoding which should be applied to the second code region (20),
displaying (S105) a decoded result of the image to show the decoded result shows that the reading method information is included in the second code region (20),
determining (S107) whether or not it is required to downloading of a program for reading the first code region (10) using the reading method information that has been obtained, and
installing, on the reading device, the program for reading the first code region (10).

## Patentansprüche

1. Informationscode (1; 1b; 1c, 1d, 1e), aufweisend:
einen ersten Codebereich (10), der erste Positionserfassungsmuster (11a, 11b, 11c) beinhaltet, die jeweils eine vorgegebene Form aufweisen und sich an Eckabschnitten des ersten Codebereichs (10) befinden und durch eine erste Mehrzahl an Zelltypen gebildet werden, und die jeweils eine Position des ersten Codebereichs (10) zeigen, die zur Erkennung des ersten Codebereichs (10) aus einem aufgenommenen Bild des Informationscodes (1) verwendet wird, einen Aufzeichnungsbereich (13), in dem aufzuzeichnende Daten durch die erste Mehrzahl an Zelltypen angeordnet sind, und einen freien Bereich (12), bei dem eine Aufzeichnung der durch die Zellen bereitgestellten Daten vermieden wird,
wobei die erste Mehrzahl an Zelltypen i) gemäß einem ersten Codeleseverfahren auf Basis des Dekodierens der Zellen in dem aufgenommenen Bild gelesen werden, und ii) sich zwischen verschiedenen Typen in punkto Farbe, Dichte oder Leuchtkraft unterscheiden; und
einen zweiten Codebereich (20), in dem Leseverfahrensinformationen, die das erste Codeleseverfahren bereitstellen, durch eine zweite Mehrzahl an Zelltypen angeordnet sind, wobei die zweite Mehrzahl an Zelltypen Zellen zum Bilden eines zweiten Positionserfassungsmusters beinhalten, das eine Position des zweiten Codebereichs (20) zeigt,
wobei die zweite Mehrzahl an Zelltypen, die in dem zweiten Codebereich (20) angeordnet sind, sich zwischen verschiedenen Typen in punkto Farbe, Dichte oder Leuchtkraft unterscheiden,
**dadurch gekennzeichnet, dass**
der zweite Codebereich (20) so angeordnet ist, dass er den Aufzeichnungsbereich (13) des ersten Codebereichs (10) teilweise abdeckt, wobei ein teilweise abgedeckter Abschnitt des Aufzeichnungsbereichs (13) ein Eckabschnitt desselben (13) ist, an dem die ersten Positionserfassungsmuster (11a, 11b, 11c) nicht angeordnet sind; und
ein Randbereich (M) zwischen dem Aufzeichnungsbereich (13) des ersten Codebereichs (10) und des zweiten Codebereichs (20) vorhanden ist, wobei die ersten und zweiten Zelltypen nicht an dem Randbereich (M) vorhanden sind, wobei der Randbereich (M) eine Breite aufweist, die einer Breite von einem von entweder jeder der ersten Zelltypen oder jeder der zweiten Zelltypen gleicht.

2. Informationscode nach Anspruch 1, wobei
die ersten Positionserfassungsmuster (11a, 11b, 11c) drei an der Zahl sind und eine Position des ersten Codebereichs (10) auf einem Medium anzeigen, auf dem der Informationscode gebildet ist, wobei die ersten Positionserfassungsmuster (11a, 11b, 11c) an drei Ecken des ersten Codebereichs (10) angeordnet sind,
der zweite Codebereichs (20) ein einzelnes zweites Positionserfassungsmuster (21) beinhaltet, wobei das zweite Positionserfassungsmuster (21) an einer Ecke des zweiten Codebereichs (20) angeordnet ist, wobei das zweite Positionserfassungsmuster (21) in einer rechteckigen Form dem ersten Positionserfassungsmuster (11a, 11b, 11c) des ersten Codebereichs (10) ähnelt, und
das zweite Positionserfassungsmuster (21) so angeordnet ist, dass es eine einzelne Ecke des ersten Codebereichs (10) abdeckt, so dass der zweite Codebereich (20) eine bestimmte Fläche an der einzelnen Ecke des ersten Codebereichs (10) abdeckt, wobei vermieden wird, dass die ersten Positionserfassungsmuster (11a, 11b, 11c) an der einzelnen Ecke des ersten Codebereichs (10) angeordnet sind.

3. Informationscode nach Anspruch 1 oder 2, wobei
der Aufzeichnungsbereich (13) des ersten Codebereichs (10) die Zellen für die Fehlerkorrektur beinhaltet,
das erste Codeleseverfahren eine Fehlerkorrekturfunktion beinhaltet, und
der zweite Codebereich (20) zumindest zu einem Teil desselben so angeordnet ist, dass er teilweise einen Teil des Aufzeichnungsbereichs (13) abdeckt, wobei der Teil desselben in den Zellen für die Fehlerkorrektur besteht, die in dem ersten Codebereich (10) angeordnet sind.

4. Informationscode nach Anspruch 3, wobei
der zweite Codebereich (20) so angeordnet ist, dass er zumindest den Aufzeichnungsbereich (13) abdeckt.

5. Informationscode (1) nach einem der Ansprüche 1 bis 4, wobei
der zweite Codebereich (20) so angeordnet ist, dass er innerhalb des ersten Codebereichs (10) vorhanden ist.

6. Informationscode nach einem der Ansprüche 1 bis 5, wobei
die erste Mehrzahl an Zelltypen und die zweite Mehrzahl an Zelltypen in punkto Farbe, Dichte oder Leuchtkraft identisch sind,
eine Form der ersten Positionserfassungsmuster des ersten Codebereichs (10) und eine Form der zweiten Positionserfassungsmuster des zweiten Codebereichs (20) identisch sind.

7. Informationscode nach Anspruch 6, wobei die zweite Mehrzahl an Zelltypen in punkto Größe kleiner ist als die erste Mehrzahl an Zelltypen, und
die erste Mehrzahl an Zelltypen aus hellfarbigen Zellen und dunkelfarbigen Zellen besteht und die zweite Mehrzahl an Zelltypen aus hellfarbigen Zellen besteht.

8. Informationscode nach Anspruch 6, wobei die zweite Mehrzahl an Zelltypen in punkto Größe der ersten Mehrzahl an Zelltypen gleicht, und
die erste Mehrzahl an Zelltypen aus hellfarbigen und dunkelfarbigen Zellen besteht und die zweite Mehrzahl an Zelltypen aus hellfarbigen Zellen besteht.

9. Informationscode nach einem der Ansprüche 1 bis 8, wobei die
Leseverfahrensinformationen eine Adresse einer Webseite zum Herunterladen eines Programms zum Erhalten der vorgegebenen Informationen durch Dekodieren des aufgenommenen Bilds des Informationscodes beinhaltet.

10. Informationscode nach einem der Ansprüche 1 bis 9, wobei die erste und die zweite Mehrzahl an Zelltypen in sowohl dem ersten als auch dem zweiten Codebereich in ihrer Form rechteckig sind.

11. Informationscodeleseverfahren zum optischen Lesen eines Informationscodes nach Anspruch 1 unter Verwendung einer Lesevorrichtung:
wobei das Informationscodeleseverfahren **dadurch gekennzeichnet ist, dass** es die folgenden Schritte aufweist:
optisches (S101) Aufnehmen eines Bilds des Informationscodes auf ein Medium, so dass der erste Codebereich (10) und der zweite Codebereich (20) optisch aufgenommen werden,
Dekodieren (S103) des optisch aufgenommenen Bilds des Informationscodes auf Basis eines Dekodierens, das auf den zweiten Codebereich (20) angewendet werden soll,
Anzeigen (S105) eines dekodierten Ergebnisses des Bilds, um zu zeigen, dass das dekodierte Ergebnis zeigt, dass die Leseverfahrensinformationen in dem zweiten Codebereich (20) enthalten sind,
Bestimmen (S107), ob es nötig ist, ein Programm zum Lesen des ersten Codebereichs (10) unter Verwendung der Leseverfahrensinformationen, die erhalten wurden, herunterzuladen, und
Installieren des Programms zum Lesen des ersten Codebereichs (10) auf der Lesevorrichtung.

## Revendications

1. Code d'information (1 ; 1b, 1c, 1d, 1e) comprenant :
une première région de code (10) comprenant des motifs de détection de première position (11a, 11b, 11c) ayant chacun une forme prédéterminée située dans les coins de la première région de code (10) et formée par une première pluralité de types de cellules et montrant chacun une position de la première région de code (10) utilisée pour la reconnaissance de la première région de code (10) à partir d'une image capturée du code d'information (1), une région d'enregistrement (13) dans laquelle les données à enregistrer sont disposées par la première pluralité de types de cellules, et une région libre (12) à partir de laquelle les données fournies par les cellules sont évitées d'être enregistrées,
dans lequel la première pluralité de types de cellules est i) lue selon une première méthode de lecture de code basée sur le décodage des cellules dans l'image capturée, et ii) étant différente, entre les types de cellules, en termes de couleur, de densité ou de luminance ; et
une deuxième région de code (20) dans laquelle les informations de la méthode de lecture fournissant la première méthode de lecture de code sont arrangées par une deuxième pluralité de types de cellules, la deuxième pluralité de types de cellules comprenant des cellules pour former un motif de détection de deuxième position montrant une position de la deuxième région de code (20),
dans lequel la deuxième pluralité de types de cellules disposées dans la deuxième région de code (20) étant, entre autres, différentes en termes de couleur, de densité ou de luminance,
**caractérisé par le fait que**
la deuxième région de code (20) recouvre partiellement la région d'enregistrement (13) de la première région de code (10), une partie partiellement recouverte de la région d'enregistrement (13) étant un coin de celle-ci (13) dans lequel les motifs de détection de première position (11a, 11b, 11c) ne sont pas disposés ; et
une région de marge (M) est prévue entre la région d'enregistrement (13) de la première région de code (10) et la deuxième région de code (20), les premier et deuxième types de cellules n'étant pas prévus dans la région de marge (M), la région de marge (M) ayant une largeur égale à la largeur de l'un des premiers types de cellules ou des deuxièmes types de cellules.

2. Le code d'information selon la revendication 1, dans lequel
les motifs de détection de première position (11a, 11b, 11c) sont au nombre de trois et indiquent une position de la première région de code (10) sur un support sur lequel le code d'information est formé, les motifs de détection de première position (11a, 11b, 11c) étant disposés à trois coins de la première région de code (10),
la deuxième région de code (20) comprend un seul motif de détection de deuxième position (21), le motif de détection de deuxième position (21) étant disposé dans un coin de la deuxième région de code (20), le motif de détection de deuxième position (21) ayant une forme rectangulaire similaire au motif de détection de première position (11a, 11b, 11c) de la première région de code (10), et
le motif de détection de deuxième position (21) est disposé de manière à couvrir un seul coin de la première région de code (10), de sorte que la deuxième région de code (20) couvre une zone spécifiée au niveau du seul coin de la première région de code (10), les motifs de détection de première position (11a, 11b, 11c) n'étant pas disposés au niveau du seul coin de la première région de code (10).

3. Le code d'information selon la revendication 1 ou 2, dans lequel
la région d'enregistrement (13) de la première région de code (10) comprend les cellules de correction d'erreur,
la première méthode de lecture du code comprend une fonction de correction d'erreur, et
la deuxième région de code (20) est située, au moins en partie de celle-ci, couvrant partiellement une partie de la région d'enregistrement (13), cette partie étant les cellules de correction d'erreurs disposées dans la première région de code (10).

4. Le code d'information selon la revendication 3, dans lequel
la deuxième région de code (20) couvre au moins la région d'enregistrement (13).

5. Le code d'information (1) selon l'une des revendications 1 à 4, dans lequel
la deuxième région de code (20) est située à l'intérieur de la première région de code (10).

6. Le code d'information selon l'une des revendications 1 à 5, dans lequel
la première pluralité de types de cellules et la deuxième pluralité de types de cellules sont identiques en termes de couleur, de densité ou de luminance,
une forme des motifs de détection de la première position de la première région de code (10) et une forme du motif de détection de la deuxième position de la deuxième région de code (20) sont identiques.

7. Le code d'information selon la revendication 6, dans lequel la deuxième pluralité de types de cellules est plus petite que la première pluralité de types de cellules, et
la première pluralité de types de cellules est composée de cellules de couleur claire et de cellules de couleur foncée et la deuxième pluralité de types de cellules est composée de cellules de couleur claire.

8. Le code d'information selon la revendication 6, dans lequel la deuxième pluralité de types de cellules est de la même taille que la première pluralité de types de cellules, et
la première pluralité de types de cellules est composée de cellules de couleur claire et de cellules de couleur foncée et la deuxième pluralité de types de cellules est composée de cellules de couleur claire.

9. Le code d'information selon l'une des revendications 1 à 8, dans lequel
les informations relatives à la méthode de lecture comprennent l'adresse d'un site web pour le téléchargement d'un programme permettant d'obtenir les informations prédéterminées en décodant l'image capturée du code d'information.

10. Le code d'information de l'une des revendications 1 à 9, dans lequel la première et la deuxième pluralité de types de cellules dans la première et la deuxième région de code sont de forme rectangulaire.

11. Procédé de lecture d'un code d'information pour lire optiquement, à l'aide d'un dispositif de lecture, un code d'information selon la revendication 1 :
le procédé de lecture de code d'information est **caractérisé en ce qu'**il comprend les étapes suivantes :
capturer optiquement (S101) une image du code d'information sur un support de telle sorte que la première région de code (10) et la deuxième région de code (20) soient capturées optiquement,
décoder (S103) l'image capturée optiquement du code d'information sur la base du décodage qui devrait être appliqué à la deuxième région de code (20),
afficher (S105) un résultat décodé de l'image pour montrer que le résultat décodé indique que l'information de la méthode de lecture est incluse dans la deuxième région de code (20),
déterminer (S107) s'il est nécessaire ou non de télécharger un programme de lecture de la première région de code (10) à l'aide des informations de méthode de lecture qui ont été obtenues, et
installer, sur le dispositif de lecture, le programme de lecture de la première région de code (10).
